# EUROPEAN PATENT APPLICATION

(11) **EP 4 738 449 A1**
(43) Date of publication of application: **06.05.2026**
(21) Application number: 24905753.0
(22) Date of filing: 09.10.2024
(51) Int. Cl.: H01M 4/13, H01M 10/0525

(54) **ELECTRODE SHEET AND BATTERY**

(30) Priority: 21.12.2023 CN 202311773277
(71) Applicant: Zhuhai CosMX Battery Co., Ltd., Zhuhai, Guangdong 519180 (CN)
(72) Inventor: WANG, Di, Zhuhai, Guangdong 519180 (CN); CHEN, Tiantian, Zhuhai, Guangdong 519180 (CN); JIANG, Huan, Zhuhai, Guangdong 519180 (CN); XIE, Jichun, Zhuhai, Guangdong 519180 (CN)
(74) Representative: Elzaburu S.L.P.
(86) International application number: PCT/CN2024/123658
(87) International publication number: WO 2025/130263

(57) **Abstract**

The present invention provides an electrode plate and battery. The electrode plate comprises a current collector and an electrode film provided on at least one functional surface of the current collector, wherein the electrode film comprises fibres, at least some of the fibres extending in a first direction of the electrode plate. By defining the composition and structure of the electrode plate, the tensile force at break and bonding strength of the electrode plate can be significantly improved, the tensile strength of the electrode plate can be increased, and the risk of breakage can be reduced. When the electrode plate is applied to a battery, the cycling performance and thickness expansion rate of the battery can be significantly improved.

## Description

The present application claims the priority to Chinese Patent Application No. 202311773277.3, filed with the China National Intellectual Property Administration on December 21, 2023 and entitled "ELECTRODE PLATE AND BATTERY", which is incorporated herein by reference in its entirety.

### TECHNICAL FIELD

The present application relates to an electrode plate and battery, belonging to the technical field of lithium-ion batteries.

### BACKGROUND

Lithium-ion batteries are widely used in fields such as electronics, communications and electric vehicles due to the advantages such as a high energy utilization efficiency, a wide operating temperature range and environmental friendliness. As an important component of a lithium-ion battery, an electrode plate has a critical impact on the performance of the lithium-ion battery. At present, the electrode plate is often prepared by a wet process, which involves preparing a slurry with an organic solvent, followed by coating, drying and rolling to obtain the electrode plate. However, organic solvents are prone to causing pollution, and subsequently, the solvents need to be dried and removed, resulting in significant energy waste and increasing production costs. Moreover, the electrode plate is prone to suffer from cracking, poor toughness, delamination, etc., making it impossible to further improve the energy density.

At present, in order to improve the energy density of the battery, reduce the energy consumption during the preparation of the electrode, and reduce the production costs, most electrodes are prepared by dry electrode processes. Compared with wet processes, the dry electrode processes place higher demands on the working pressure, rolling accuracy and uniformity of a rolling device, and require a greater compaction force, which leads to problems such as breakage and powder detachment that are prone to occur during the rolling process. Therefore, how to improve the tensile force at break of the electrode plate and reduce the risk of breakage during the rolling process, is the technical problem to be solved urgently in the art.

### SUMMARY

The present invention provides an electrode plate. By defining the composition and structure of the electrode plate, the tensile force at break and bonding strength of the electrode plate can be significantly improved, the tensile strength of the electrode plate can be increased, and the risk of breakage can be reduced. The electrode plate can be applied directly to a battery, and can significantly improve the cycling performance and thickness expansion rate of the battery.

The present invention further provides a battery which has excellent cycling performance, thickness expansion rate, etc., due to the inclusion of the above electrode plate.

In a first aspect of the present invention, provided is an electrode plate comprising a current collector, and an electrode film provided on at least one functional surface of the current collector, wherein
the electrode film comprises fibres, at least some of the fibres extending in a first direction of the electrode plate.

The electrode plate as described above, wherein an included angle between the extension direction of the fibres and the first direction of the electrode plate ranges from 0-30°.

The electrode plate as described above, wherein the tensile force at break of the electrode plate in the first direction is greater than or equal to the tensile force at break of the electrode plate in a second direction; and
the second direction is perpendicular to the first direction.

The electrode plate as described above, wherein the ratio of the tensile force at break of the electrode plate in the first direction to the tensile force at break of the electrode plate in the second direction is (1-2) : 1, preferably (1.02-1.52) : 1.

The electrode plate as described above, wherein the ratio of the tensile force at break of the electrode plate in the first direction to the thickness of the electrode plate is (0.008-0.1) : 1;
wherein the tensile force at break of the electrode plate in the first direction is in kgf, and the thickness of the electrode plate is in µm.

The electrode plate as described above, wherein the tensile force at break of the electrode plate in the first direction is 3-6 kgf; and/or
the tensile force at break of the electrode plate in the second direction is 2-5.5 kgf; and/or
the thickness of the electrode plate is 65-350 µm.

The electrode plate as described above, wherein the tensile force at break of the current collector in the second direction is less than the tensile force at break of the current collector in the first direction.

The electrode plate as described above, wherein the ratio of the tensile force at break of the current collector in the first direction to the tensile force at break of the current collector in the second direction is (0.67-2.75) : 1, preferably (0.875-1.67) : 1.

The electrode plate as described above, wherein the electrode film further comprises active material bodies, wherein at least some of the fibres have a size in the first direction that is greater than the median particle size of the active material bodies.

The electrode plate as described above, wherein the active material bodies comprise LiCoO₂, LiMn₂O₄, LiMnO₂, LiNiO₂, LiFePO₄, LiMnPO₄, LiCoₓNi₁₋ₓO₂, and LiCoₓNi_{1-x-y}Al_{y}O₂, where 0 ≤ x ≤ 1 and 0 ≤ y ≤ 1, or
the active material bodies comprise at least one of artificial graphite, natural graphite, soft carbon, hard carbon, mesocarbon microbeads, Si, SiOₓ, Si-C, and SiOₓ-C.

The electrode plate as described above, wherein the ratio of the size of individual fibres in the first direction to the median particle size of the active material bodies is 1 : (1-4000), preferably 1 : (1-400).

The electrode plate as described above, wherein the size of the individual fibre is 250 nm-1 mm; and/or
the median particle size of the active material bodies is 250 nm-30 µm.

The electrode plate as described above, wherein in a thickness direction of the electrode plate, the fibres extend in the thickness direction of the electrode plate.

The electrode plate as described above, wherein in the thickness direction of the electrode plate, adjacent active material bodies are connected to each other by the fibres.

The electrode plate as described above, wherein the electrode plate further comprises an adhesive layer, which is located between the current collector and the electrode film.

The electrode plate as described above, wherein the adhesive layer comprises a binder and a conductive agent, wherein the binder comprises at least one of polyvinylidene fluoride, a styrene-butadiene rubber, an EVA hot-melt adhesive, a TPR hot-melt adhesive, a polyolefin hot-melt adhesive, a polyamide hot-melt adhesive, a polyester hot-melt adhesive, a polyethylene hot-melt adhesive and a polyester amide hot-melt adhesive, and/or
the conductive agent comprises at least one of conductive carbon black, carbon nanotubes, and graphene.

The electrode plate as described above, wherein the fibres comprise at least one of fibrous polytetrafluoroethylene, polyvinylidene fluoride, an ethylene-tetrafluoroethylene copolymer, a fluorinated ethylene-propylene copolymer, polyvinylpyrrolidone, polyethylene oxide, carboxymethyl cellulose, styrene-butadiene rubber, polyacrylic acid, a hot-melt adhesive, and polyethylene.

The electrode plate as described above, wherein the electrode film further comprises recesses, wherein the recesses are located on a surface of the side of the electrode film away from the current collector, and/or the recesses are located inside the electrode film.

The electrode plate as described above, wherein the recess is filled with a lithium-containing compound, and the lithium-containing compound comprises at least one of lithium oxide, lithium carbonate, and lithium fluoride.

In a second aspect of the present invention, provided is a battery comprising the electrode plate of the first aspect.

The implementation of the present invention has at least the following beneficial effects.

The fibres in the electrode plate provided in the present invention extend in a first direction of the electrode plate, which can increase the bonding strength between the electrode film and the current collector, while enabling better stress transmission, increasing the tensile force at break of the electrode plate in the first direction, reducing the risk of breakage during the rolling process, improving the process efficiency, and thus ensuring the stability of the electrode plate during long-term cycling.

The battery provided in the present invention has excellent electrochemical performances, for example, an excellent cycling performance and a low thickness expansion rate due to the inclusion of the above electrode plate.

### BRIEF DESCRIPTION OF DRAWINGS

FIG. 1 is a top SEM view of an electrode plate at a first magnification in accordance with an embodiment of the present invention.
FIG. 2 is a top SEM view of an electrode plate at a second magnification in accordance with an embodiment of the present invention.
FIG. 3 is a cross-sectional SEM view of an electrode plate in accordance with an embodiment of the present invention.
FIG. 4 is a schematic structural view of an electrode plate in accordance with an embodiment of the present invention.

### List of reference signs:

1- electrode film; 2- adhesive layer; 3 - current collector.

### DESCRIPTION OF EMBODIMENTS

In order to make the objects, technical solutions and advantages of embodiments of the present application clearer, the technical solutions in the embodiments of the present application will be described clearly and completely below with reference to the accompanying drawings in the embodiments of the present application. Obviously, the embodiments described are some of, rather than all of, the embodiments of the present application. All the other embodiments obtained by those of ordinary skill in the art based on the embodiments of the present application without creative efforts shall fall within the scope of protection of the present application.

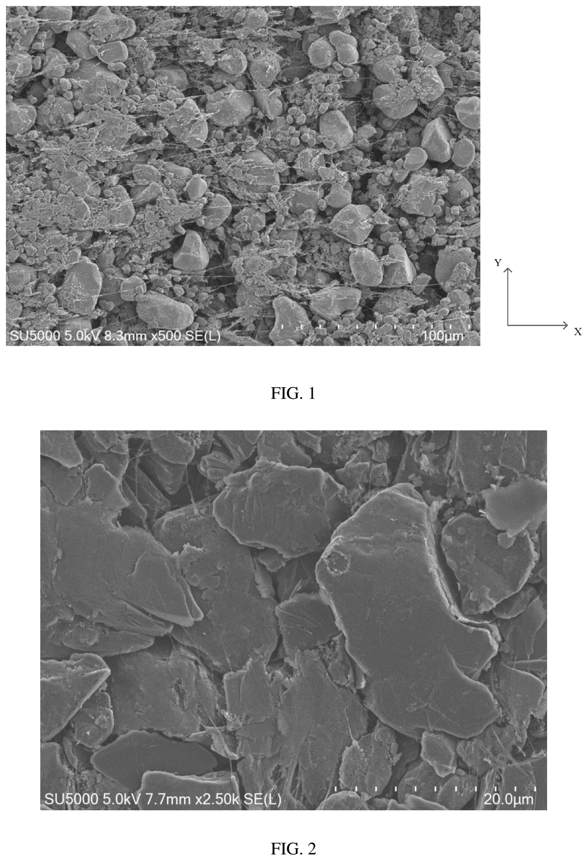

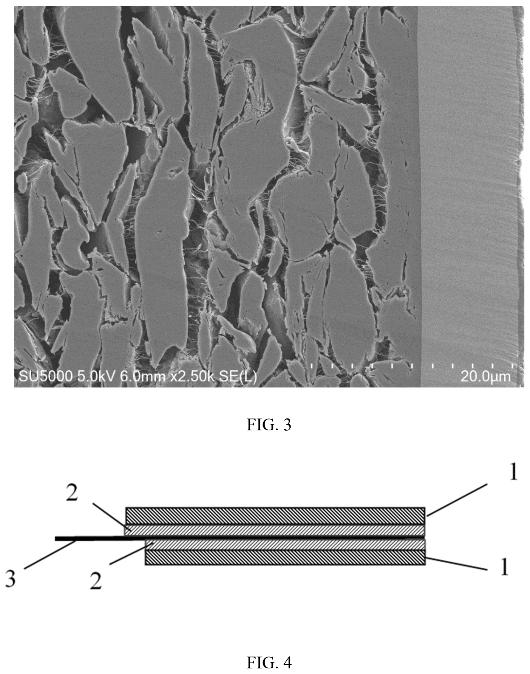

In FIGS. 1 to 4, the direction X is a length direction of the electrode plate, the direction Y is a width direction of the electrode plate, and the direction Z is a thickness direction of the electrode plate.

In a first aspect of the present invention, provided is an electrode plate comprising a current collector 3 and an electrode film 1 provided on at least one functional surface of the current collector, wherein the electrode film comprises fibres, at least some of the fibres extending in a first direction of the electrode plate.

In the present invention, there are no limitations on the specific shapes of the electrode plate and the current collector, which may be a conventional cuboid shape in the art.

The current collector has two largest and opposite functional surfaces for providing the electrode film. The electrode film in the electrode plate of the present invention may be provided on only one functional surface of the current collector, or on both functional surfaces of the current collector.

The electrode film is used for an electrochemical reaction to convert chemical energy into electrical energy.

The electrode film component of the present invention at least comprises an active material bodies and a binder, wherein the active material bodies comprise at least an active material and a conductive agent; and the active substance is used for an electrochemical reaction, the conductive agent is used to improve the conductivity of the electrode film, and the binder is used to bind the active substance and the conductive agent, thereby forming a complete electrode film.

The fibre refers to continuous or discontinuous filaments. In some embodiments, the fibre has a filamentary structure formed from the binder by means of a fibrillation process or electrostatic spraying. In the present invention, there are no limitations on the specific material of the fibres, which can be specifically a binder commonly used in the art. By way of example, the fibres comprise at least one of fibrous polytetrafluoroethylene (PTFE), polyvinylidene fluoride (PVDF), an ethylene-tetrafluoroethylene copolymer (ETEF), a fluorinated ethylene-propylene copolymer (FEP), polyvinylpyrrolidone (PVP), polyethylene oxide (PEO), carboxymethyl cellulose (CMC), styrene-butadiene rubber (SBR), polyacrylic acid (PAA), a hot-melt adhesive and polyethylene (PE).

The fibres are in line-to-surface contact with the active material bodies, which increases the contact area between the fibres and the active material bodies and enables a tighter bond between the fibres and the active material bodies, improving the flexibility of the electrode plate and preventing cracking and powder shedding.

The distribution of fibres in the electrode plate affects the mechanical properties of the electrode plate. According to the present invention, by defining that at least some of the fibres extend in the first direction of the electrode plate, the tensile force at break of the electrode plate can be significantly improved and the risk of breakage can be reduced, such that the cycling performance of the battery is significantly improved and the thickness expansion rate is reduced.

The first direction of the electrode plate refers to the extension direction of the electrode plate, for example, the length direction or the width direction of the electrode plate. In other words, the extension direction of the fibres is consistent with that of the electrode plate.

As shown in FIG. 1, when the first direction is the length direction of the electrode plate (direction X), the extension direction of the fibres is consistent with the length direction of the electrode plate, which ensures a tighter bond between the fibres and the active material bodies, increasing the tensile strength of the electrode plate in the length direction, enabling it to withstand greater tensile forces.

In the present invention, there are no limitations on the tensile force at break of the electrode plate in the extension direction thereof. In some embodiments, the tensile force at break of the electrode plate in a first direction is greater than or equal to the tensile force at break of the electrode plate in a second direction; and the second direction is perpendicular to the first direction. The electrode plate extends in the rolling direction during the rolling process, and the electrode plate is wound in the winding direction during the winding process, and therefore, the electrode plate needs to withstand a certain tensile strength in the rolling direction and the winding direction. When both the rolling direction and the winding direction are consistent with the first direction, the tensile force at break of the electrode plate in the first direction is defined to be greater than or equal to the tensile force at break of the electrode plate in the second direction, such that the electrode plate is prevented from being broken during the rolling process, and the electrode plate is prevented from being cracked due to excessive force during the winding process.

When the first direction is the length direction of the electrode plate, the second direction refers to the width direction of the electrode plate.

In the electrode film, at least 90% by mass of the fibres extend in the first direction of the electrode plate, that is, the included angle between the extension direction of at least 90% by mass of the fibres and the first direction of the electrode plate is 0. In some embodiments, the included angle between the extension direction of the fibres and the first direction of the electrode plate is 0-30°.

When the electrode plate is applied to the battery, the expansion and contraction of the battery during charging and discharging are inevitable. In some embodiments, the ratio of the tensile force at break of the electrode plate in the first direction to the tensile force at break of the electrode plate in the second direction is (1-2) : 1. By defining the ratio of the tensile force at break in the first direction to that in the second direction of the electrode plate, the expansion of the electrode plate in the first direction and in the second direction during charging and discharging can be effectively mitigated, and in particular, the expansion of the electrode plate in the first direction can be mitigated, Preferably, the ratio of the tensile force at break in the first direction to that in the second direction of the electrode plate is (1.02-1.52) : 1, such that not only the resistance and interfacial reaction inside the electrode plate can be reduced, thereby improving the electrochemical performances of the battery, but also the mechanical stability of the battery can be improved, thereby prolonging the service life of the battery.

The thickness of the electrode film affects the loading of active materials, thus affecting the energy density of the battery. In some embodiments, the ratio of the tensile force at break of the electrode plate in the first direction to the thickness of the electrode plate is (0.008-0.1) : 1, wherein the tensile force at break of the electrode plate in the first direction is in kgf, and the thickness of the electrode plate is in µm. In this way, the loading of active materials in the battery can be increased while ensuring the mechanical strength of the electrode plate, thus increasing the energy density (stored electrical energy per volume or weight) of the battery and thereby ensuring a higher capacity of the battery within the same sizes.

The thickness of the electrode plate is equal to the sum of the thickness of the current collector and the thickness of the electrode film.

In the present invention, there are no limitations on the specific values of the tensile force at break and thickness of the electrode plate, which can be determined according to the actual situation. For example, in some embodiments, the tensile force at break of the electrode plate in the first direction is 3-6 kgf, preferably 4.3-5 kgf; and/or, the tensile force at break of the electrode plate in the second direction is 2-5.5 kgf, preferably 3.3-4.2 kgf; and/or, the thickness of the electrode plate is 65-350 µm.

In that present invention, the break tensile force of the current collector in the second direction is less than that of the current collector in the first direction. The ratio of the tensile force at break of the current collector in the first direction to the tensile force at break of the current collector in the second direction is (0.67-2.75) : 1. preferably (0.875-1.67) : 1, to ensure the strength of the electrode plate during processing and reduce the risk of breakage.

Further, the tensile force at break of the current collector in the first direction is 3-5.5 kgf, preferably 3.5-5 kgf; and the tensile force at break of the current collector in the second direction of 2-4.5 kgf, preferably 3-4 kgf.

The electrode film comprises a plurality of fibres and a plurality of active material bodies, wherein at least some of the fibres have a size in the first direction that is greater than the median particle size of the active material bodies. The size of the fibres in the first direction refers essentially to the length of the fibres, and the median particle size of the active material bodies refers to the particle size corresponding to a cumulative volume fraction of 50%. The size of the fibres in the first direction actually denotes the absolute sizes of all fibres in the first direction, i.e., the size spans in the first direction.

In some embodiments, the ratio of the size of individual fibres in the first direction to the median particle size of the active material bodies is 1 : (1-4000), ensuring that multiple fibres can span across the active material bodies and bind and secure the active material bodies, thereby reducing the expansion rate during cycling.

In the present invention, there are no limitations on the specific sizes of the fibres and the active material bodies, and in some embodiments, the size of the fibres in the first direction is 250 nm-1 mm; and/or, the median particle size of the active material bodies is 250 nm-30 µm.

In some embodiments, in a thickness direction of the electrode plate, the fibres extend in the thickness direction of the electrode plate. In other words, the fibres are distributed in the thickness of the electrode plate as viewed in the thickness direction of the electrode plate.

The fibres are binding components that connect between a plurality of active material bodies, and in some embodiments, in the thickness direction of the electrode plate, adjacent active material bodies are connected to each other by the fibres. The active material bodies are tightly connected to each other by the fibres. This further ensures that the fibres bind and secure the active material bodies, thereby reducing the expansion rate during cycling.

In the present invention, there are no limitations on the specific types of an active material and a conductive agent in active material bodies. For example, in some embodiments, the conductive agent may be at least one of conductive carbon black, carbon fibres, conductive graphite, graphene, carbon nanotubes, acetylene black, Ketjen black, copper, nickel, aluminium, silver, and gold; and the active material may be a positive electrode active material or a negative electrode active material. By way of example, the positive electrode active material comprises at least one of LiCoO₂, LiMn₂O₄, LiMnO₂, LiNiO₂, LiFePO₄, LiMnPO₄, LiCoₓNi₁₋ₓO₂ (0≤x≤1), and LiCoₓNi_{1-x-y}Al_{y}O₂ (0 ≤ x ≤ 1, 0 ≤ y ≤ 1); and the negative electrode active material comprises at least one of artificial graphite, natural graphite, soft carbon, hard carbon, mesocarbon microbeads, Si, SiOₓ, Si-C and SiOₓ-C. In this case, the mass content of silicon in the electrode film is 3-100%.

In the present invention, there are no limitations on the preparation method for the above electrode plate, which can be prepared by a conventional method in the art. For example, the active material, the conductive agent and the binder are mixed, and then an external high shear force is applied to fibrillate the binder to form a fibre network that binds the active material and the conductive agent, and then the mixture is extruded to form the electrode film, which is finally laminated on a current collector to obtain an electrode plate. Such a dry electrode process imposes higher demands on the working pressure, the rolling accuracy and the uniformity of the rolling device compared to a wet process, and in the present invention, problems such as breakage and powder detachment that are prone to occur during the rolling process of the electrode plate are avoided by defining at least some of the fibres extending in the first direction of the electrode plate.

In an embodiment, the active material layer may be fabricated by a dry process, wherein an active material, fibre particles, and a conductive agent are dry-mixed without the use of a solvent to produce a composite material with a solid component concentration that is essentially 100%. Dry mixing means that an active material and fibre particles are mixed without using a solvent while the solid component concentration is essentially 100%. During the dry mixing, a first conductive agent or other components other than the active material and the fibre particles can also be added. With the addition of materials other than the active material and fibre particles, the solid component concentration in the dry mixing is also essentially 100%.

Subsequently, an adhesive layer slurry is coated onto the current collector, and dried to form a hot-melt current collector, and the above-described composite material is then calendered to form a plate, thereby fabricating a plate-shaped active material layer. In addition, the hot-melt current collector and the active material layer are laminated and hot-pressed to form the electrode plate.

Compared with existing wet processes for the preparation of electrode plates, during the manufacturing process, a solvent, an active material and a binder need to be mixed to form a slurry, then the slurry is coated onto the surface of the current collector, and then the slurry coating on the surface of the current collector is dried to volatilize the solvent. It can be seen that the drying procedure of the wet process makes the battery manufacturing process more complicated and reduces the manufacturing efficiency. In an embodiment of the present invention, the electrode plate is prepared by a dry process without the use of a solvent, wherein the active material and fibre particles are mixed to prepare a composite material, the composite material is calendered into a plate, and then the plate-shaped active material layer is hot-pressed with a hot-melt current collector to prepare the electrode plate. This eliminates the need for drying the slurry coating on the surface of the current collector to volatilize the solvent, thereby simplifying the manufacturing process of the electrode plate and improving the manufacturing efficiency of the battery.

In an embodiment, the preparation process of the electrode plate described above comprises the steps of: premixing a binder, a conductive agent and an active material, followed by shearing and rolling, to obtain an electrode film; and then hot-pressing the electrode film and laminating same on the current collector to obtain the electrode plate.

The premixing is performed at a rotation speed of 300-10000 r/min and a temperature of 0-90°C for 10-600 min.

Specifically, during the shearing process, the molecular chains of the binder are fully extended to form fibres, which can fully bind the active material bodies formed by the active material and the conductive agent. Finally, the hot-pressing is performed to obtain the electrode film.

In the present invention, there are no particular limitations on the premixing, as long as the above-mentioned rotation speed, temperature and time are satisfied. In some embodiments, the premixing may be performed in a stirrer.

In the present invention, there are no particular limitations on the shearing, and in some embodiments, the shearing may be performed in an air-flow mill device. The premixed materials are fluidized by nozzles in an air-flow mill device, and the accelerated materials converge at the intersection of the jet streams from several nozzles, resulting in intense collision, friction, and shearing to achieve fibreization of the binder so as to obtain a dough-like material, the dough-like material being extruded via a screw pump, and subsequently subjected to a rolling treatment. The feeding speed of the air-flow mill device is 150 - 9000 g/min.

In the present invention, there are no particular limitations on the rolling, which can be a rolling process commonly used in the art, such as a rolling process in an open mill. In a possible embodiment, the rolling process is such that the rolling direction is consistent with the first direction to facilitate at least some of the fibres extending in the first direction of the electrode plate.

In the present invention, there are no particular limitations on the hot-pressing, which can be a hot-pressing process commonly used in the art, such as multi-stage hot-pressing film forming treatment.

In the preparation method for the electrode film of the present invention, the raw material system comprising the conductive agent, the binder and the active material is subjected to the premixing treatment by a specific process, such that the conductive agent, the binder and the active substance can be fully mixed, which is helpful to the subsequent shear treatment; and the raw material system after the premixing treatment is then subjected to the shear treatment by a specific process, such that the raw material system after the premixing treatment can be fully fiberized to obtain the electrode film of the present invention.

In order to improve the bonding strength between the electrode film and the current collector, in some embodiments, the electrode plate further comprises an adhesive layer 2, which is located between the current collector and the electrode film; and the adhesive layer comprises a binder and a conductive agent. The binder is used to improve the bonding strength between the adhesive layer and the current collector and between the adhesive layer and the electrode film, and the conductive agent is used to improve the conductivity of the adhesive layer. In addition, the conductive agent can also increase the roughness of the adhesive layer and increase the specific surface area of the adhesive layer, thereby further improving the bonding strength force and peeling force between the adhesive layer and the current collector and between the adhesive layer and the electrode film.

The adhesive layer comprises a binder and a conductive agent.

The binder may be polyvinylidene fluoride (PVDF), a styrene-butadiene rubber (SBR), or a hot-melt adhesive. The hot-melt adhesive comprises an EVA-based hot-melt adhesive, a TPR-based hot-melt adhesive, a polyolefin-based hot-melt adhesive, a polyamide (PA)-based hot-melt adhesive, a polyester (PES)-based hot-melt adhesive, s polyethylene (LDPE, HDPE)-based hot-melt adhesive, a polyesteramide (PEA)-based hot-melt adhesive, etc. The conductive agent may be a conductive agent with a relatively large specific surface area, such as conductive carbon black, carbon nanotubes, or graphene. In some embodiments, the electrode film further comprises recesses, wherein the recesses are located on a surface of the side of the electrode film away from the current collector, and/or the recesses are located inside the electrode film. By forming several recesses, the infiltration channels for the electrolyte can be effectively increased, and the infiltration of the electrolyte can be improved, which is conducive to improving the transport speed of lithium ions and increasing the charging rate.

In the present invention, there are no limitations on the process of forming the recesses. In an embodiment, recesses may be formed on the surface or inside the electrode film by a laser method. In another embodiment, recesses are formed on the surface of the electrode film by physical embossing.

During the first cycle of a lithium-ion battery, a solid electrolyte interphase (SEI) forms on the surface of the electrode plate, leading to irreversible lithium loss. A lithium supplement agent is usually added to the electrode plate to achieve lithium supplementation. In some embodiments, the recess is filled with a lithium-containing compound. The lithium-containing compound comprises at least one of lithium oxide, lithium carbonate, and lithium fluoride. By filling the recesses with lithium-containing compounds, the irreversible lithium loss can be reduced.

In a specific implementation of the invention, a lithium-containing compound, a binder, a conductive agent, and an active material are pre-mixed, then subjected to a shearing treatment and a hot-pressing treatment to obtain the electrode film. The electrode film is prepared by adding a lithium-containing compound to the raw material system. In addition, when the above-described electrode plate is applied to a battery, the lithium-containing compound and the electrolyte react during the electrolyte injection process to generate lithium ions, which compensate for the lithium ions required for SEI formation, thereby improving the initial efficiency of the battery.

In a second aspect of the present invention, provided is a battery comprising the electrode plate of the first aspect described above.

In particular, the electrode plate comprises a negative electrode plate and a positive electrode plate. The negative electrode plate, the positive electrode plate and the separator may form a cell for a battery, wherein at least one of the negative electrode plate and the positive electrode plate is the electrode plate of the first aspect described above. By installing the cell together with a protection circuit inside the battery housing, a battery for charging/discharging can be formed. The quality of the cell directly determines the quality of the battery, and the battery of the present invention demonstrates excellent performance in terms of cycling performance, thickness expansion rate, etc., due to the use of the above electrode plate.

The present invention will be further explained with reference to specific examples and comparative examples. Unless otherwise stated, the reagents, materials and instruments used in the following description are all conventional reagents, conventional materials and conventional instruments, and are all commercially available. The reagents and materials involved may also be synthesized by conventional synthesis methods.

### Example 1

The preparation process of the negative electrode plate in this example was as follows.

Artificial graphite, polytetrafluoroethylene, and conductive carbon were added to a dispersion device and fully dry-mixed to obtain a uniformly dispersed mixture. The above mixture was added into an air-flow mill device and dispersed for 25 minutes at a feed rate of 150 g/min to achieve the fibrillation of polytetrafluoroethylene, so as to obtain a dough-like negative electrode material. The mass ratio of artificial graphite, polytetrafluoroethylene, to conductive carbon was 97 : 2 : 1.

The negative electrode material was extruded and drawn by a screw pump, and then rolled by a hot roller press to obtain a negative electrode film, wherein the extrusion and drawing temperature was 100°C, the rolling pressure was 20 t, the rolling speed was 5 m/min, and the rolling direction was controlled such that the fibres extended in a first direction.

The negative electrode film was multi-stage hot-pressed and laminated onto both surfaces of a copper foil with a thickness of 10 µm, to obtain a negative electrode plate F1 with a thickness of 50 µm. The ratio of the size of the fibres in the first direction to the median particle size of the active material bodies was 1 : 1000.

### Example 2

The preparation process was substantially the same as that in Example 1, except that
the parameters of the hot roller press were adjusted such that a negative electrode plate F2 with a thickness of 65 µm was obtained, and the ratio of the size of the fibres in the first direction to the median particle size of the active material bodies was 1 : 400.

### Example 3

The preparation process was substantially the same as that in Example 1, except that
the parameters of the hot roller press were adjusted such that a negative electrode plate F3 with a thickness of 100 µm was obtained, and the ratio of the size of the fibres in the first direction to the median particle size of the active material bodies was 1 : 200.

### Example 4

The preparation process was substantially the same as that in Example 1, except that
the parameters of the hot roller press were adjusted such that a negative electrode plate F4 with a thickness of 350 µm was obtained, and the ratio of the size of the fibres in the first direction to the median particle size of the active material bodies was 1 : 100.

### Example 5

The preparation process of the positive electrode plate in this example was as follows.

Lithium cobalt oxide, polytetrafluoroethylene, and conductive carbon were added to a dispersion device and fully dry-mixed to obtain a uniformly dispersed mixture. The above mixture was added into an air-flow mill device and dispersed for 25 minutes at a feed rate of 150 g/min, and after thorough dispersion and fibrillation of polytetrafluoroethylene, a dough-like positive electrode material was obtained. The mass ratio of lithium cobaltate, polytetrafluoroethylene, to conductive carbon was 97 : 2 : 1.

The positive electrode material was extruded by a screw pump and rolled to obtain a positive electrode film.

The positive electrode film was multi-stage hot-pressed and laminated onto a current collector, to obtain a positive electrode plate Z1 with a thickness of 50 µm. The ratio of the size of the fibres in the first direction to the median particle size of the active material bodies was 1 : 1000.

### Example 6

The preparation process was substantially the same as that in Example 5, except that
the parameters of the hot roller press were adjusted such that a positive electrode plate Z2 with a thickness of 65 µm was obtained, and the ratio of the size of the fibres in the first direction to the median particle size of the active material bodies was 1 : 400.

### Example 7

The preparation process was substantially the same as that in Example 5, except that
the parameters of the hot roller press were adjusted such that a positive electrode plate Z3 with a thickness of 100 µm was obtained, and the ratio of the size of the fibres in the first direction to the median particle size of the active material bodies was 1 : 200.

### Example 8

The preparation process was substantially the same as that in Example 5, except that
the parameters of the hot roller press were adjusted such that a positive electrode plate Z4 with a thickness of 350 µm was obtained, and the ratio of the size of the fibres in the first direction to the median particle size of the active material bodies was 1 : 100.

### Comparative Example 1

1. Preparation of negative electrode plate
   the parameters of the hot roller press were adjusted such that the fibre filaments did not extend in the first direction. The other operations are the same as those in Example 1, to manufacture the negative electrode plate F11.
2. Preparation of positive electrode plate
   the parameters of the hot roller press were adjusted such that the fibre filaments did not extend in the first direction. The other operations are the same as those in Example 5, to manufacture the positive electrode plate Z11.

### Comparative Example 2

The preparation process was substantially the same as that in Example 1, except that
the parameters of the hot roller press were adjusted such that the tensile force at break of the negative electrode plate in the first direction was less than that of the negative electrode plate in the second direction, the ratio of the size of the fibres in the first direction to the median particle size of the active material bodies was 1 : 500, and the negative electrode plate F12 of this comparative example was obtained.

### Comparative Example 3

The preparation process was substantially the same as that in Comparative Example 2, except that
the parameters of the hot roller press were adjusted such that the ratio of the size of the fibres in the first direction to the median particle size of the active material bodies was 1 : 5000, and the negative electrode plate F13 of this comparative example was obtained.

### Test example

### 1. Preparation of lithium-ion battery

A positive electrode plate, a separator (purchased from Asahi Kasei ND522), and a negative electrode plate were welded to the positive and negative electrode tabs and then wound to obtain a cell, the cell was placed in an aluminium-plastic film packaging housing and sealed, then an electrolyte was injected, followed by formation and sorting to obtain a lithium-ion battery.

The electrolyte comprised a solvent, a lithium salt, and additives. The solvent was a mixed solvent of ethylene carbonate, dimethyl carbonate, and ethyl methyl carbonate in a mass ratio of 3 : 4 : 3. The lithium salt was lithium hexafluorophosphate, with a concentration in the electrolyte of 1.2 mol/L. The additives included fluoroethylene carbonate and vinylene carbonate. The mass content of fluoroethylene carbonate in the electrolyte was 3 wt%, and the mass content of vinylene carbonate in the electrolyte was 1 wt%.

Specifically, in the above preparation process, the positive electrode Z1 was paired with the negative electrode F1, the positive electrode Z1 was paired with the negative electrode F2, the positive electrode Z1 was paired with the negative electrode F3, the positive electrode Z1 was paired with the negative electrode F4, the positive electrode Z2 was paired with the negative electrode F1, the positive electrode Z3 was paired with the negative electrode F1, the positive electrode Z4 was paired with the negative electrode F1, the positive electrode Z11 was paired with the negative electrode F11, the positive electrode Z11 was paired with the negative electrode F12, and the positive electrode Z11 was paired with the negative electrode F13. The resulting lithium-ion batteries were sequentially denoted as D1, D2, D3, D4, D5, D6, D7, D8, D9, and D10.

### 2. Performance test of electrode plate

The above positive electrode plates, negative electrode plates and current collectors were cut into test specimens having a width of 15 ± 0.25 mm and a length of 75 ± 0.5 mm, respectively. Using a universal testing machine, with a gauge length set to 50 ± 0.5 mm and a tensile speed of 200 mm/min, the positive electrode plates, negative electrode plates, and current collectors were stretched in the first direction and the second direction, respectively, to test the maximum tensile force at break.

2) The morphology of the positive and negative plates at different magnifications was tested using a scanning electron microscope; The cross-section of the electrode plates was cut using argon-ion gas, and the cross-sectional morphology of the electrode plates was tested using a scanning electron microscope.

3) Number of breakages during 500 m of electrode plate rolling: the number of breakages occurring during the rolling of 500 m of the electrode plate was counted.

### 3. Performance test of battery

### 1) Capacity retention rate test

At 25°C, a battery was charged at a constant current of 1C to 4.45 V, then charged at a constant voltage to a cut-off current of 0.05C, then left to stand for 5 minutes, and finally discharged at a constant current of 1C to 3.0 V. The process was the first cycle and was repeated 300 times. The capacity retention rate was calculated on the basis of the capacity retention rate (%) of the battery after 300 cycles = the discharge capacity after 300 cycles / the discharge capacity after the first cycle × 100%.

### 2) Test of thickness expansion rate

The initial PPG thickness of the battery at 50% SOC before cycling was recorded as P1; after 300 cycles, the PPG thickness of the test battery at 100% SOC was measured and recorded as P2; and then the thickness expansion rate % = (P2-P1)/P1 × 100%.

Test results were shown in Table 1 and Table 2.

**Table 1**

| Electrode plate No. | Thickness, µm | Ratio of size of fibres in first direction to median particle size of active material bodies | Tensile force at break F1 in first direction (kgf) | Tensile force at break F2 in second direction (kgf) | Ratio of F1/F2 | Ratio of F1 to thickness | Number of breakages during rolling per 500 m |
|---|---|---|---|---|---|---|---|
| F11 | 50 | / | 1.012 | 2.77 | 0.365 : 1 | 0.020 : 1 | 11 |
| Z11 | 50 | / | 0.986 | 2.19 | 0.450 : 1 | 0019 : 1 | 19 |
| F12 | 100 | 1 : 500 | 3.058 | 3.241 | 0.944 : 1 | 0.031 : 1 | 9 |
| F13 | 100 | 1 : 5000 | 2.898 | 1.917 | 1.511 : 1 | 0.029 : 1 | 10 |
| F1 | 50 | 1 : 1000 | 2.953 | 1.875 | 1.575 : 1 | 0.059 : 1 | 7 |
| F2 | 65 | 1 : 400 | 3.574 | 3.036 | 1.177 : 1 | 0.055 : 1 | 2 |
| F3 | 100 | 1 : 200 | 4.776 | 3.913 | 1.22 : 1 | 0.048 : 1 | 0 |
| F4 | 350 | 1 : 100 | 5.936 | 3.879 | 1.53 : 1 | 0.017 : 1 | 0 |
| Z1 | 50 | 1 : 1000 | 3.902 | 2.563 | 1.52 : 1 | 0.078 : 1 | 3 |
| Z2 | 65 | 1 : 400 | 4.101 | 3.036 | 1.351 : 1 | 0.063 : 1 | 1 |
| Z3 | 100 | 1 : 200 | 4.41 | 4.088 | 1.079 : 1 | 0.044 : 1 | 0 |
| Z4 | 350 | 1 : 100 | 4.762 | 4.692 | 1.015 : 1 | 0.014 : 1 | 0 |

**Table 2**

| Battery No. | Capacity retention rate after 300T cycles (%) | Thickness expansion rate after 300T cycles (%) |
|---|---|---|
| D1 | 95.8 | 5 |
| D2 | 98.8 | 4.5 |
| D3 | 99.2 | 4.6 |
| D4 | 92.6 | 5.2 |
| D5 | 97.4 | 5 |
| D6 | 98.5 | 5.1 |
| D7 | 88.1 | 5.7 |
| D8 | 75 | 7.5 |
| D9 | 91.1 | 5.9 |
| D10 | 84.1 | 6.9 |

As can be seen from Table 1, at least some of the fibres in the electrode plates of Examples 1-8 extend in the first direction of the electrode plate, while the fibres in the electrode plate of Comparative Example 1 do not extend in the first direction of the electrode plate, and the tensile forces at break in the first direction of the electrode plates of Examples 1-8 are higher than that of Comparative Example 1, indicating that the electrode plate of the examples can withstand a tensile force range significantly higher than that of the comparative example, and indicating that extending at least some of the fibres in the first direction of the electrode plate helps to improve the tensile force at break of the electrode plate in the first direction.

Comparing Examples 1-8 with Comparative Example 2, it can be seen that the risk of breakage can be further reduced by defining the tensile force at break of the electrode plate in the first direction to be greater than or equal to the tensile force at break of the electrode plate in the second direction.

Comparing Examples 1-8 and Comparative Example 3, it can be seen that the risk of breakage can be further reduced by defining the ratio of the size of the individual fibres in the first direction to the median particle size of the active material bodies.

Comparing Examples 1-8, it can be seen that by controlling the thickness of the electrode plate, the frequency of breakage during rolling can be further reduced.

As can be seen from Table 2, at the same electrode plate thickness, the battery prepared using the electrode plate of the Examples exhibits superior cycling performance and thickness expansion rate, indicating that the fibres of the Examples better wrap the active material, which helps to mitigate the expansion during cycling caused by the intercalation and deintercalation of lithium ions in the active material.

The preferred specific examples and testing verification of the present invention have been described in detail above. It should be understood that a person of ordinary skill in the art would be able to make various modifications and variations according to the concept of the present invention without involving any inventive effort. Therefore, all the technical solutions that can be obtained by those skilled in the technical field through logical analysis, reasoning or limited experiments on the basis of the prior art according to the concept of the present invention should all fall within the scope of protection of the present invention.

## Claims

1. An electrode plate, comprising a current collector and an electrode film provided on at least one functional surface of the current collector, wherein
the electrode film comprises fibres, at least some of the fibres extending in a first direction of the electrode plate.

2. The electrode plate according to claim 1, wherein an included angle between the extension direction of the fibres and a first direction of the electrode plate ranges from 0-30°.

3. The electrode plate according to claim 1, wherein the tensile force at break of the electrode plate in the first direction is greater than or equal to the tensile force at break of the electrode plate in a second direction; and
the second direction is perpendicular to the first direction.

4. The electrode plate according to claim 1, wherein the ratio of the tensile force at break of the electrode plate in the first direction to the tensile force at break of the electrode plate in the second direction is (1-2) : 1, preferably (1.02-1.52) : 1.

5. The electrode plate according to claim 1, wherein the ratio of the tensile force at break of the electrode plate in the first direction to the thickness of the electrode plate is (0.008-0.1) : 1,
wherein the tensile force at break of the electrode plate in the first direction is in kgf, and the thickness of the electrode plate is in µm.

6. The electrode plate according to any one of claims 1-5, wherein the tensile force at break of the electrode plate in the first direction is 3-6 kgf; and/or
the tensile force at break of the electrode plate in the second direction is 2-5.5 kgf; and/or
the thickness of the electrode plate is 65-350 µm.

7. The electrode plate according to any one of claims 1-5, wherein the tensile force at break of the current collector in the second direction is less than the tensile force at break of the current collector in the first direction.

8. The electrode plate according to claim 7, wherein the ratio of the tensile force at break of the current collector in the first direction to the tensile force at break of the current collector in the second direction is (0.67-2.75) : 1, preferably (0.875-1.67) : 1.

9. The electrode plate according to any one of claims 1-5, wherein the electrode film further comprises active material bodies, wherein at least some of the fibres have a size in the first direction that is greater than the median particle size of the active material bodies.

10. The electrode plate according to claim 9, wherein the active material bodies comprise LiCoO₂, LiMn₂O₄, LiMnO₂, LiNiO₂, LiFePO₄, LiMnPO₄, LiCoₓNi₁₋ₓO₂, and LiCoₓNi_{1-x-y}Al_{y}O₂, where 0 ≤ x ≤ 1, and 0 ≤ y ≤ 1, or
the active material bodies comprise at least one of artificial graphite, natural graphite, soft carbon, hard carbon, mesocarbon microbeads, Si, SiOₓ, Si-C, and SiOₓ-C.

11. The electrode plate according to claim 9, wherein the ratio of the size of individual fibres in the first direction to the median particle size of the active material bodies is 1 : (1-4000), preferably 1 : (1-400).

12. The electrode plate according to claim 11, wherein the size of individual fibres in the first direction is 250 nm-1 mm; and/or
the median particle size of the active material bodies is 250 nm-30 µm.

13. The electrode plate according to any one of claims 1-5, wherein in the thickness direction of the electrode plate, the fibres extend in the thickness direction of the electrode plate.

14. The electrode plate according to claim 1, wherein in the thickness direction of the electrode plate, adjacent active material bodies are connected to each other by the fibres.

15. The electrode plate according to claim 1, wherein the electrode plate further comprises an adhesive layer, the adhesive layer being located between the current collector and the electrode film.

16. The electrode plate according to claim 15, wherein the adhesive layer comprises a binder and a conductive agent,
the binder comprises at least one of polyvinylidene fluoride, a styrene-butadiene rubber, an EVA hot-melt adhesive, a TPR hot-melt adhesive, a polyolefin hot-melt adhesive, a polyamide hot-melt adhesive, a polyester hot-melt adhesive, a polyethylene hot-melt adhesive and a polyester amide hot-melt adhesive, and/or
the conductive agent comprises at least one of conductive carbon black, carbon nanotubes, and graphene.

17. The electrode plate according to claim 1, wherein the fibres comprise at least one of fibrous polytetrafluoroethylene, polyvinylidene fluoride, an ethylene-tetrafluoroethylene copolymer, a fluorinated ethylene-propylene copolymer, polyvinylpyrrolidone, polyethylene oxide, carboxymethyl cellulose, styrene-butadiene rubber, polyacrylic acid, a hot-melt adhesive, and polyethylene.

18. The electrode plate according to any one of claims 1-4, wherein that the electrode film further comprises recesses, wherein the recesses are located on a surface of the side of the electrode film away from the current collector, and/or the recesses are located inside the electrode film.

19. The electrode plate according to claim 18, wherein the recess is filled with a lithium-containing compound;
wherein the lithium-containing compound comprises at least one of lithium oxide, lithium carbonate, and lithium fluoride.

20. A battery, comprising the electrode plate according to any one of claims 1-19.
